# EUROPEAN PATENT APPLICATION

(11) **EP 2 894 644 A1**
(43) Date of publication of application: **15.07.2015**
(21) Application number: 12884209.3
(22) Date of filing: 06.09.2012
(51) Int. Cl.: H01G 11/32

(54) **HIGH-POWER ELECTRIC DOUBLE-LAYER CAPACITOR**

(71) Applicant: Obschestvo s ogranichennoy otvetstvennostyu 'Tovarischestvo energeticheskikh i electromobilnikh proektov', Moscow 127018 (RU)
(72) Inventor: DASHKO, Oleg Grigorievich, Moskovskaya oblast g. Korolev 141077 (RU); DOLGOLAPTEV, Anatoly Vasilyevich, Moskovskaya oblast pos. Pestovo 140071 (RU); BULDYAEV, Alexander Fedorovich, Moskovskaya oblast g. Schelkovo 141100 (RU); SHKOLNIKOV, Evgeniy Iosifovich, Moscow 115419 (RU); KREPAK, Oleg Veniaminovich, Moskovskaya oblast g. Moscow 109396 (RU); SMIRNOV, Viktor Alekseev, Moskovskaya oblast Podolsk 142117 (RU)
(74) Representative: Maiwald Patentanwalts GmbH
(86) International application number: PCT/RU2012/000741
(87) International publication number: WO 2014/038970

(57) **Abstract**

Description of the electrode of a capacitor with dual electric layer, wherein the negative (polarizable) electrode is made from activated carbon fiber cloth, and the current collector of this electrode is made from non-activated carbon fibrous material attached to the carbon fiber cloth by stitching by means of carbon thread. A lead coating is applied to a portion of the current collector surface; said coating is used to connect a current lead.

## Description

### Technical Field

The present invention relates to development of energy-storage electrochemical capacitors, wherein the charge is accumulated at the at the interface between two media, namely, an electrode and electrolyte, and therefore named as "capacitors with double electric layer", and "super capacitors", "hybrid capacitors" (Japan), "ultra capacitors" (Germany, USA), "electrochemical capacitors: (France, Canada), "ionistors" (Russia and other CIS countries). Their main advantage in comparison with conventional electrolytic capacitors consists in an augmented energy density. Certain types of such capacitors can store a more than 10 kJ/kg and discharge to a load at a specific capacitance of 1 to 10 kW/kg (www.kite.ru/articles/condenser/2005_6_12.php).

To this must be added the ample possible quantity of "charge-discharge" cycles, reliability and durability, and a wide operating temperature range.

The above said unique composition of features of capacitors having double electrical layer to a large extent predetermine possibility and practicability of their use, first of all in the transport electrical and hybrid means. The other promising direction is their use as "compensators" in power plants having unstable characteristics, e.g., wind-mill electric generating units, power generating units with solar cell batteries, tidal power plants.

### Background Art

The capacitors with double electric layer can be "symmetric", when the positive and negative electrodes are made polarizable, and "asymmetric", when one electrode from each pair of electrodes is made polarizable, and the other one is made non-polarizable. By their performance characteristics the first type capacitors are named "pulse capacitors" and the second type capacitors are named "power capacitors". The present invention relates to power capacitors. An example of such a capacitor is a capacitor described in publication WO 99/24996, comprising inside its body a negative electrode made from a carbon material, current collectors, a positive electrode made from selenium dioxide, separators setting apart the electrodes, an electrolyte made from aqueous solutions of inorganic acids and their mixtures. Splitting of one negative electrode into two electrodes having half-thickness each provides for virtually one-half reduction of ohmic loss of energy with rather high current density values, however the specific characteristics obtained are insufficient.

The other analog of the present invention is the capacitor described in the WO Application # 99/31688, said capacitor being arranged in a casing formed by load-bearing side panels and comprising at least one or n capacitor elements incorporating a positive electrode made in the form of a rectangular plate and being enveloped on both sides in porous separators, said rectangular plate consisting of a grid with a pasty active mass put inside its cells, said positive electrode being arranged between two negative electrodes placed in their turn between the insulators having the shape of plates and preventing capacitor electrodes from electric contact to each other, between current collectors with a protective layer made from a graphite fiber, in this case, two negative electrodes are short-circuited. The negative electrode is made from a porous carbon material, the positive electrode is made from a material including the active lead mass pressed-in the grid made of an alloy containing 95% lead and 5% antimony. The current leads have on one side a protective coating made from graphite foil and impregnated with an acid-resistant polymer, the other side of current leads is protected with an insulator preventing capacitor electrodes from electric contact to each other. Aqueous solution of sulfuric acid is used as electrolyte. The capacitor is subjected to compression between the load-bearing panels of the casing. Owing to the capacitor compression the ohmic losses get reduced, the capacitor heating is prevented, which means the increase of the device efficiency at large. However, in the process of compression gases produced as a result of charging and recharging cannot be transported at sufficient rate to a counter electrode for cleanup in consequence of flooding the pores of the negative and positive electrodes. What is more, the gases produced increase ohmic resistance, because they block ions passage and build a pressure inside the capacitor. Surplus electrolyte formed as a result of compression, when leaking away, cause reduction of the capacitor capacity, damage to metal surfaces of the capacitor electrical leads, can cause a short-circuit, presence of leaked away electrolyte may lead to damage of external insulation, to the capacitor premature failure,

Closest to the proposed invention is the capacitor described in the RU Patent # 2262148, said capacitor comprising at least one or n storage cells, each of which includes a positive electrode enveloped on both sides in porous separators, made in the form of a rectangular plate consisting of a grid, the cells of which are filled by force with a pasty active mass, the capacitor located between two negative electrodes, arranged between insulators having a shape of rectangular plates, on the inner side of which metal terminals having a protective coating made from graphite foil are placed, and on the outer side the capacitor is pressed by load-bearing panels, wherein the positive electrode, enveloped by porous separators, and arranged in the slot of the flexible frame of rectangularo 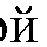 shape and having T-profile, the inner diameter of which is formed by the upper part of letter "T" leg of the T-profile, and which has a hole with a seat for a filter and an opening in the form of slot, while the insulators are made as box-type.

The capacitor is enclosed in a casing consisting of two side panels connecting load-bearing side panels located at the end, and flexible frame is made from elastic acid-resistant material, for example, PVC, additionally, a paste-like active mass consists of lead dioxide filled with polypropylene fiber. The negative electrode is made from activated carbon fiber cloth having unit inner face of 1200 sq.m/g and a density per unit area of140±20 g/sq.cm. Porous separators are made from superfine glass fiber having a volumetric porosity up to 97 % , pore size of 7 to 10 µm, having a total thickness of 0.7 to 1 mm, the protective layer made from graphite foil contains ceresin with addition of 5 % of colophony (wt %), used as electrolyte is sulphuric acid aqueous solution having a density of 1.3 to 1.4 g/cm³, wherein the metal terminal is installed inside the insulator with use of a hot-melt adhesive, for example, a copolymer of vinyl acetate with polypropylene.

Said capacitor has some disadvantages:
- a metal sheet installed in the insulator with use of a hot-melt adhesive (e.g., Sevilen) serves as a collector of current from the negativeo 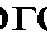 o electrode, a protective sheet made from Graphlex impregnated with Perizin is fixed to said metal sheet by means of hot-melt adhesive.
- such a design of the current collectors of the negative electrodes is sufficiently complicated, and it calls for manufacturing metal sheets, manufacture of sheets made from Graflex and their impregnation in Perizin. Moreover, sealing of the metal sheet and the sheet made from Graflex by means of the hot-melt adhesive is time-consuming and it does not guarantee that the joint will be air tight.
- the negative electrode is not fixed in the cell rigidly, and it can be displaced in the process of assembly, and this may cause a short-circuit in the cell and non-uniform compression of the elements in the process of the capacitor compression.

### Disclosure of Invention

The object of the present invention is to provide a power capacitor with double electric layer, said capacitor providing for:
- decreasing the quantity of the parts to be manufactured;
- reduction of labor-consuming process-oriented operations in the course of the capacitor assembly;
- decreasing the weight and internal resistance of the capacitor, and consequently, enhancement of its specific characteristics.

These objects are solved in the present invention owing mostly to the change of design of the current collector of the capacitor negative electrode. According to the present invention the negative electrode proper is made from activated carbon fiber cloth, and its current collector is fabricated from non-activated fibrous carbon material which is attached to the electrode fiber cloth, and a portion of the surface of which is covered with a lead coating.

The current collector fibrous material is attached to the electrode fiber cloth by stitching with the use of a carbon thread.

The lead coating made on a portion of the surface of the current collector fibrous material can be applied using an electrochemical (galvanic) technique.

There may be additionally applied to the activated carbon fiber cloth of the negative electrodea an activated carbon powder mixed with a binder (proton-conductive polymer). The above said and other specific features and advantages of the capacitor will be more evident from the following description and accompanying drawings.

### Description of Drawings

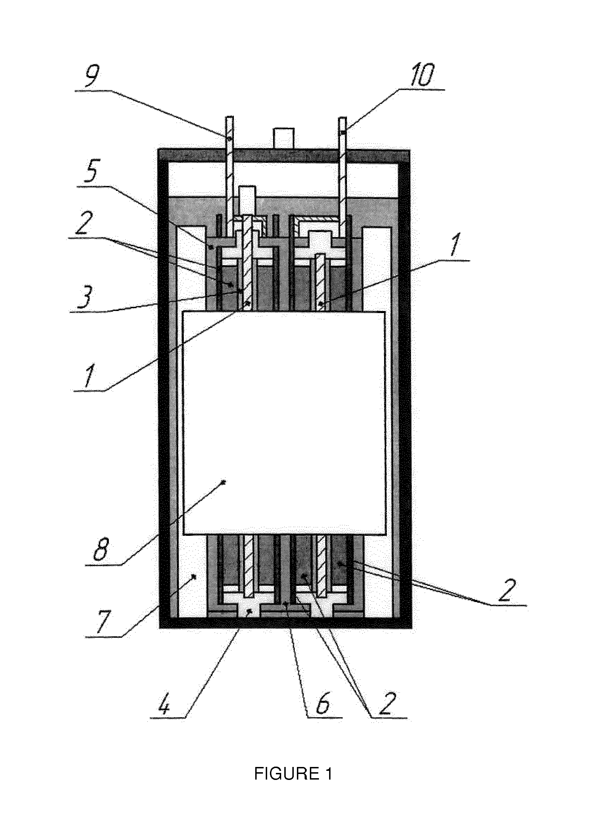

Figure 1 shows a sectional view of the capacitor in accordance with the present invention.

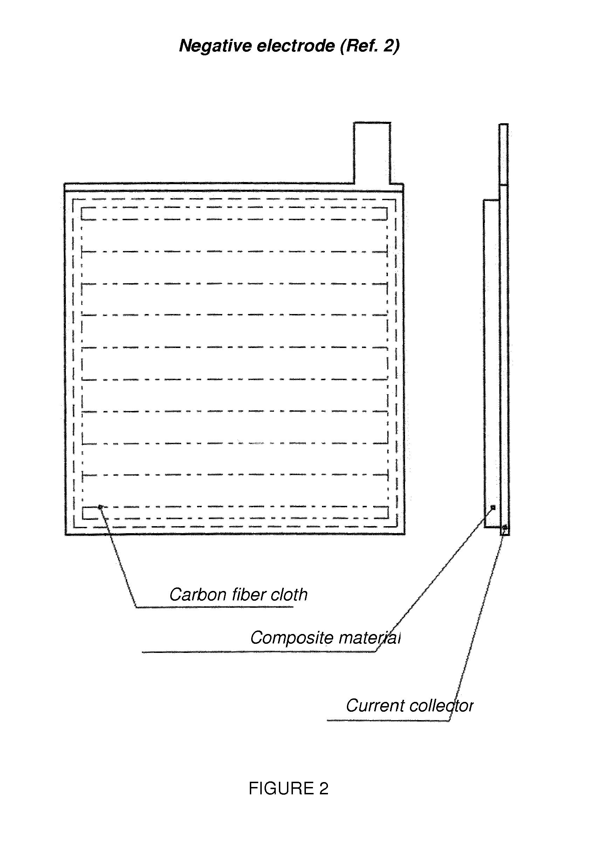

Figure 2 presents the negative electrode of the capacitor in accordance with the present invention with the current collectors being attached.

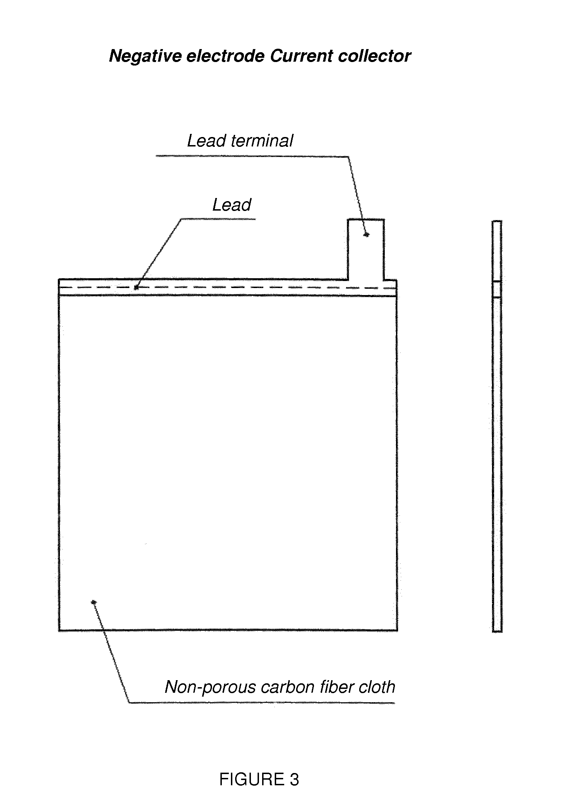

Figure3 depicts a current collector of the negative electrode.

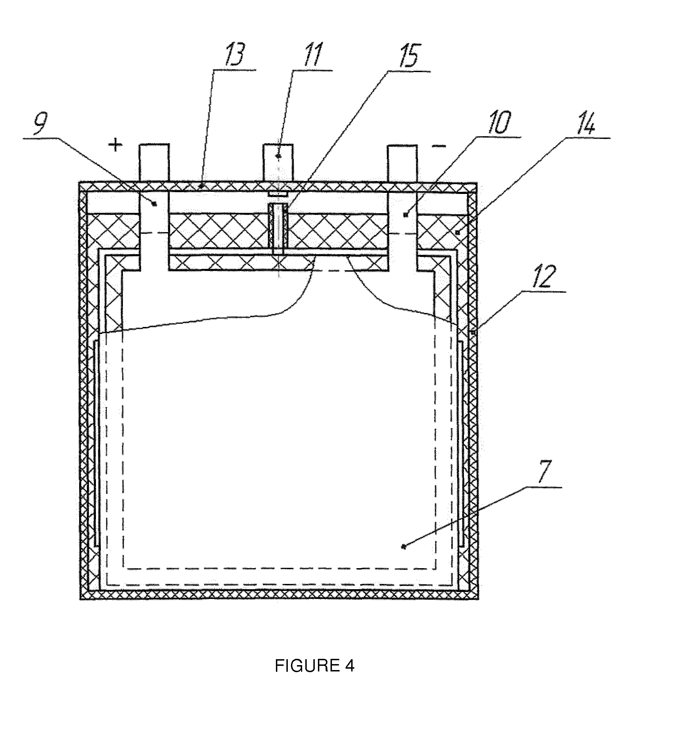

Figure 4 shows a fragmentary section of the capacitor.

### Detailed Description of Invention

The capacitor main elements are, at least one positive (non-polarizable) electrode (1), at least one negative (polarizable) electrode (2) and separator (3).

Positive electrode (1).

It consists of a grid cast of lead-calcium-tin alloy (0,0 5% of calcium, 1.2 to 1.5 % of tin, the remainder is impure lead).

Put inside the grid cells is an active material consisting mainly of lead dioxide. The electrode is arranged inside a sealing gasket (4).

Negative electrode (2) is made from a composite material, wherein served as a matrix is an activated carbon fiber cloth, e.g. UVIS-AK-T-040 having a unit interior face of about 1200 sq.m/g, the filler is activated powdered carbon mixed with a proton-conductive binder. Current collector (10) of the negative electrode (2) is a non-activated (non-porous) carbon fiber cloth with a portion of its surface being applied with by electrochemical method lead in a strip of 2 to 4 mm wide. This done, said portion of the fiber cloth is place in a mould, then melt lead having a temperature t = 520 to 560 °C. In the process a lead-cast current lead is formed. Further, the current collector (non-activated fiber cloth) is attached to the electrode fiber cloth by stitching with a carbon thread (for example, there can be used frolon sewing threads).

Separator (3) is made from a superfine glass fiber having a pore volume (volumetric porosity) up to 95 % and a pore size of 10 to 25 µm and thickness of 0.7 to 2 mm.

Sealing gasket (4) is made from elastic acid-resistant material (for example, from soft PVC or silicone) using a mold casting method. The gasket has a hole to receive a terminal of the positive electrodea, as well as a vent hole. There is a groove made over its inner perimeter to place in said groove the positive electrode.

Terminal (5) and intermediate (6) insulators serve to prevent electrolyte contact with terminals of the electrodes.

Terminal insulator (5) of box-type having rectangular shape of channel section with an opening for the terminal of the current collector of the negativeo 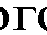 o electrode is made from high-impact polystyrene using mold casting technique.

Intermediate insulator (6) is a double-sided box-type, rectangular in shape, I-section with two openings in the upper portion for the terminals of the current collectors of the negative electrodes. It is also fabricated from high-impact polystyrene.

Prior to staring the process of the capacitor assembly the positive and negative electrodes are impregnated within 30 to 60 minutes in aqueous solution of sulphuric acid having a density of 1.25 to 1.30 g/sq.cm. This done, the negative electrodes get pressed by applying a unit pressure of 5 to 8 kg/sq.cm.

The capacitor assembly is carried out as follows. Put in a certain order on the process-oriented base plate are^
- Load-bearing panel (7) (aluminum sheet of 14 to 16 mm thick);
- terminal insulator (5);
- negative electrode (2), wherein the current the current collector terminal enters the insulator openinga;
- positive electrode (1) arrange in gasket (4) enveloped on both sides in separators (3) ;-negative electrode (2) ;
- negative-electrode (2);
- intermediate insulator (6) and once more:
- negative electrode;
- positive electrode with a gasket and separators etc. Depending on the required voltage of the capacitor battery.

Terminal insulator and load-bearing panel are placed on the negative electrode.

By means of tie (8) all the capacitor elements are compressed with a specific pressure of 7 to 10 kg/sq.cm.

In the process of compression the insulator ends get joined with the edges of gaskets (4) entirely precluding a possibility of the electrolyte leakage and providing a space the inner volume of which is filled with electrolyte.

The positive and negative current leads (9, 10) get soldered by means of a soldering iron and connected in series using brackets.

Sealant (14) is poured in the casing (12), and then the assembled capacitor is arranged inside it. The required amount of sealant is added from top to a level being 2 to 3 mm lower than the level of vent pipes (15).

Cover (13) is welded to casing (12) using heat sealing technique.

Valve (11) is installed in the hole in the cover.

### Industrial Applicability

The capacitor manufactured in accordance with the present invention provides for considerable reduction of cost of its manufacture with simultaneous enhancement of its operational characteristics.

## Claims

1. A power capacitor with double electric layer comprising:
at least one positive lead electrode,
at least one negative electrode
current collectors of the electrodes and
a separator setting apart the electrodes, wherein:
the negative electrode is made from activated carbon fiber cloth, while the current collector of this electrode is made from non-activated fibrous carbon material stitched to the activated carbon fiber cloth of the electrode and having on a portion of its surface a lead coating which a current lead is connected to.

2. A capacitor of claim 1, **characterized in that** the current lead fibrous carbon material and the carbon fiber cloth of the electrode are attached to each other by stitching with a carbon thread.

3. A capacitor of claim 1 or claim 2, **characterized in that** activated carbon powder mixed with proton-conductive binder is applied to the activated carbon fiber cloth of the negative electrode.

4. A capacitor of any above claims, **characterized in that** the lead coating is applied to a portion of the surface of the fibrous carbon material of the negative electrode current lead by way of electrochemical treatment.
